(19) Europäisches Patentamt / European Patent Office / Office européen des brevets

(11) **EP 1 754 031 B1**

(12) **FASCICULE DE BREVET EUROPEEN**

(45) Date de publication et mention de la délivrance du brevet:
**06.02.2008 Bulletin 2008/06**

(51) Int Cl.:
*G01H 1/00* *(2006.01)*    *G01H 11/06* *(2006.01)*
*B64C 27/00* *(2006.01)*

(21) Numéro de dépôt: **05775275.0**

(22) Date de dépôt: **02.06.2005**

(86) Numéro de dépôt international:
**PCT/FR2005/001358**

(87) Numéro de publication internationale:
**WO 2006/003278 (12.01.2006 Gazette 2006/02)**

(54) **PROCEDE POUR REGLER AU MOINS UN ROTOR DEFICIENT D'UN GIRAVION**

VERFAHREN ZUR JUSTIERUNG VON MINDESTENS EINEM DEFEKTEN ROTOR EINES DREHFLÜGLERS

METHOD OF ADJUSTING AT LEAST ONE FAULTY ROTOR OF A ROTORCRAFT

(84) Etats contractants désignés:
**CH GB IT LI**

(30) Priorité: **10.06.2004 FR 0406274**

(43) Date de publication de la demande:
**21.02.2007 Bulletin 2007/08**

(73) Titulaire: **EUROCOPTER**
**13725 Marignane Cédex (FR)**

(72) Inventeur: **AUBOURG, Pierre-Antoine**
**F-13006 Marseille (FR)**

(74) Mandataire: **Renaud-Goud, Thierry**
**GPI & Associés**
**EuroParc de Pichaury**
**Bât D1-1 étage**
**1330, rue Guillibert de la Lauzière**
**13856 Aix-en-Provence Cédex 3 (FR)**

(56) Documents cités:
**EP-A- 1 310 645**    **EP-A- 1 310 646**
**FR-A- 2 824 395**

**Description**

La présente invention concerne un procédé pour régler au moins un rotor déficient d'un giravion, un hélicoptère par exemple.

Dans le cadre de la présente invention, on entend par réglage du rotor déficient, le réglage d'éléments (par exemple des bielles de commande de pas des pales, des masses ou des volets compensateurs qui sont montés sur les pales de ce rotor) qui ont pour objet de réduire et minimiser les vibrations d'au moins une partie d'un giravion, la cabine de pilotage par exemple.

De telles vibrations constituent un problème important qu'il s'agit de combattre dans la mesure où ces vibrations provoquent :

- des contraintes alternées dans tout le giravion entraînant des phénomènes de fatigue des matériaux et ayant donc une influence directe sur la sécurité ;

- des vibrations dans le fuselage du giravion qui peuvent réduire la précision et l'efficacité d'appareils, en particulier des armes, montées sur ce fuselage ; et

- des vibrations dans la cabine, ce qui est bien entendu très gênant pour le confort des pilotes et des passagers.

On connaît, par le brevet FR 2824395 appartenant à la demanderesse, un procédé pour régler un rotor d'un aéronef à voilure tournante. Ce procédé consiste à utiliser un réseau de neurones de référence qui illustre les relations entre, d'une part, des accélérations représentatives de vibrations engendrées sur au moins une partie d'un giravion de référence et, d'autre part des défauts et des paramètres de réglage.

On rappellera qu'un réseau de neurones est composé, de façon usuelle, d'un ensemble d'éléments opérant en parallèle et tels que, pour des entrées données, les sorties de l'ensemble soient caractérisées par le réseau de neurones. Ces éléments s'inspirent des systèmes nerveux biologiques. Comme dans le cas de neurones biologiques, les fonctions du réseau de neurones sont fortement déterminées par les liaisons entre éléments. Il est ainsi possible de faire « apprendre » un réseau de neurones de telle sorte qu'il puisse accomplir une fonctionnalité particulière en ajustant les valeurs des liaisons (qu'on appelle des poids) entre les éléments. Cet « apprentissage » est fait ou ajusté pour que, à une entrée donnée, le réseau délivre une sortie bien spécifique. En ce qui concerne les réseaux de neurones, on se référera par exemple à un article intitulé « Learning representation by back propagation errors » de D.Rumlhart, G.Hinton et R.Williams, qui est paru dans la publication « Nature », 1996, volume 323, pages 533 à 536.

Lorsque des défauts sont identifiés sur un rotor d'un giravion particulier, on utilise le réseau de neurones, pourvu de cellules d'entrée et de sortie, pour déterminer au moins un paramètre de réglage à faire évoluer. La valeur de réglage $\alpha$ d'un paramètre de réglage à faire évoluer est alors obtenue en minimisant l'expression suivante :

$$\sum_c \lambda_c \sum_a \lambda_a \sum_h \lambda_h \left\| R_{c,a,h}(\alpha) + \gamma_{c,a,h} \right\|^2$$

dans laquelle :

- $\lambda_c$ est un coefficient de pondération dépendant de la phase c (stationnaire, croisière...) de vol,

- $\lambda_a$ est un coefficient de pondération dépendant d'un accéléromètre a,

- $\lambda_h$ est un coefficient de pondération dépendant de l'harmonique h,

- $R_{c,a,h}$ est la cellule de sortie du réseau de neurones correspondant à l'harmonique h, l'accéléromètre a et la phase de vol c,

- $\gamma_{c,a,h}$ est un signal d'accélération à la fréquence h mesuré par l'accéléromètre a pour la phase de vol c.

Cependant, cette expression ne prend pas en compte la perception physiologique des occupants du giravion à savoir l'équipage et les passagers. Une sensation de balourd virtuel en cabine demeure ce qui est particulièrement inconfortable voire même dangereux, le confort du pilote du giravion étant un gage de sécurité. Ce balourd virtuel est généré par un effet de battement de fréquence provoqué par le couplage des vibrations d'harmonique B-1 et B d'un rotor de giravion, B étant le nombre de pales de ce rotor.

La présente invention a pour objet de proposer un procédé, permettant de s'affranchir de la limitation décrite ci-dessus en introduisant un facteur, dénommé facteur de cognement dans la suite du texte par commodité, liant le niveau vibratoire en cabine et la perception physiologique des occupants.

La prise en compte de la perception physiologique des occupants pour le réglage des rotors principal et anti-couple d'un giravion est particulièrement novatrice puisque un critère de santé est désormais considéré en plus des niveaux vibratoires mesurés.

Selon l'invention, un procédé pour régler au moins un rotor déficient, principal ou anti-couple, d'un giravion particulier utilise un réseau de neurones qui illustre les relations entre, d'une part, des accélérations représentatives de vibrations engendrées sur au moins une partie d'un giravion de référence et, d'autre part des défauts et des paramètres de réglage. Après avoir déterminé les défauts éventuels du rotor déficient, on définit une valeur de réglage α d'au moins un des paramètres de réglage en minimisant avantageusement la relation d'ajustement suivante :

$$\sum_{c} \lambda_c \sum_{a} \lambda_a \left( \sum_{h=1}^{B-2} (\lambda_h \left\| R_{c,a,h}(\alpha) + \gamma_{c,a,h} \right\|^2) + \lambda_{B-1} \left( \frac{\left\| R_{c,a,B-1}(\alpha) + \gamma_{c,a,B-1} \right\|^2}{\left\| \gamma_{c,a,B} \right\|} \right)^2 \right)$$

dans laquelle :

- $\lambda_c$, $\lambda_a$, $\lambda_h$ et $\lambda_{B-1}$ sont des coefficients de pondération dépendant respectivement de la phase de vol c (stationnaire, croisière...), d'un accéléromètre a, d'harmoniques h et du nombre de pales B du rotor auquel on retranche une unité,

- $R_{c,a,h}$ est une cellule de sortie du réseau de neurones correspondant à l'harmonique h, l'accéléromètre a et la phase de vol c,

- $R_{c,a,B-1}$ est une cellule de sortie du réseau de neurones correspondant à l'harmonique B-1, l'accéléromètre a et la phase de vol c,

- $\gamma_{c,a,h}$ est un signal d'accélération à la fréquence h mesuré par l'accéléromètre a pour la phase de vol c,

- $\gamma_{c,a,B}$ est un signal d'accélération à la fréquence B mesuré par l'accéléromètre a pour la phase de vol c, et

- $\gamma_{c,a,B-1}$ est un signal d'accélération à la fréquence (B-1) mesuré par l'accéléromètre a pour la configuration c.

Le deuxième terme $\dfrac{\left\| R_{c,a,B-1}(\alpha) + \gamma_{c,a,B-1} \right\|^2}{\left\| \gamma_{c,a,B} \right\|}$ représente le facteur de cognement. De cette manière, le réglage du rotor déficient prend en compte un critère physiologique non négligeable pour l'ensemble des occupants du giravion.

De plus, de façon avantageuse, le réseau de neurones est obtenu à partir d'au moins une première série de mesures utilisant un giravion de référence considéré comme un corps déformable, dont les rotors principal et anti-couple sans défaut sont réglés selon un réglage de référence pour lequel le niveau vibratoire d'au moins une partie dudit giravion de référence est minimal.

En outre, la première série de mesures est faite en mesurant, lors d'un fonctionnement particulier dudit giravion de référence, les valeurs d'au moins une accélération qui sont mesurées à des endroits quelconques de ladite partie du giravion de référence et qui sont représentatives de vibrations engendrées au niveau de cette partie du giravion de référence :

  a) d'une part, avec le rotor, principal ou anti-couple, sans défaut du giravion de référence qui est réglé selon ledit réglage de référence;

  b) d'autre part, en introduisant des défauts dans ledit rotor, principal ou anti-couple, sans défaut;

c) puis, en faisant varier les valeurs de réglage d'une pluralité de paramètres de réglage du rotor.

Préférentiellement, on réalise la première série de mesures au moins au cours des vols d'essai suivants :

- un vol de référence avec le rotor, principal ou anti-couple, sans défaut réglé selon ledit réglage de référence;

- des vols avec des défauts du rotor, principal ou anti-couple,

- un vol avec un déréglage particulier d'au moins une masse d'équilibrage d'une pale;

- un vol avec un déréglage particulier d'au moins une bielle d'une pale; et

- un vol avec un déréglage particulier d'au moins un volet compensateur qui est prévu sur le bord de fuite d'une pale.

De plus, au moins un de ces vols d'essai comporte les phases suivantes, au cours desquelles on réalise des mesures :

- une phase de vol stationnaire ;

- une phase de vol de croisière à environ 50 m/s;

- une phase de vol à la puissance maximale continue ; et,

- un essai au sol avec les rotors principal et anti-couple qui tournent.

Selon l'invention, pour détecter les défauts éventuels du rotor déficient:

d) on fait une deuxième série de mesures sur un giravion particulier, en mesurant les valeurs d'au moins certaines accélérations au niveau de ladite partie du giravion particulier lors d'un fonctionnement particulier dudit giravion particulier; et

e) à partir de cette deuxième série de mesures d'accélérations et du réseau de neurones, on détecte les défauts éventuels dudit rotor déficient.

Enfin, des éléments de réglage définissant les paramètres de réglage comportent au moins:

- une masse d'équilibrage de chacune des pales du rotor déficient;

- une bielle sur chacune des pales du rotor déficient, à l'exception d'une pale qui représente une pale de référence ; et

- un volet compensateur sur le bord de fuite de chacune des pales du rotor déficient si celui-ci est le rotor principal.

L'invention et ses avantages apparaîtront avec plus de détails dans le cadre de la description qui suit avec un exemple de réalisation donné à titre illustratif en référence aux figures annexées qui représentent :

- la figure 1, un schéma d'un giravion auquel on applique le procédé selon l'invention, et

- la figure 2, une pale de rotor pourvue d'éléments de réglage.

Les éléments présents dans plusieurs figures distinctes sont affectés d'une seule et même référence.

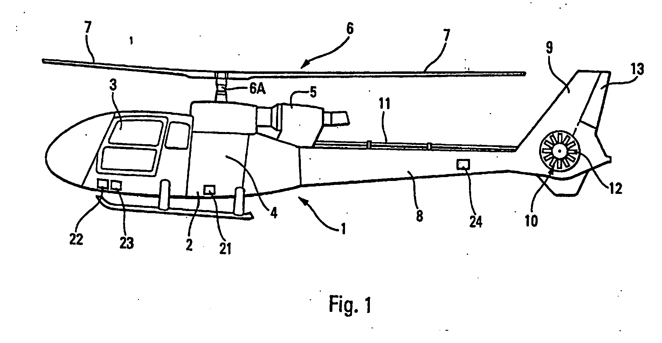

La figure 1 présente un giravion 1, plus précisément un hélicoptère, auquel on applique le procédé selon l'invention. Il comporte un fuselage 2 possédant, dans sa partie avant 3, une cabine de pilotage. La partie intermédiaire 4 du fuselage 2 comporte une installation motrice 5 permettant notamment d'entraîner en rotation un rotor principal 6 d'avancement et de sustentation pourvu d'une pluralité de pales 7.
En outre, le fuselage 2 est prolongé vers l'arrière par une poutre de queue 8, à l'extrémité de laquelle est agencée une dérive 9 munie d'un volet 13. De plus, cette poutre de queue 8 possède, par exemple à la base de la dérive 9, un rotor anti-couple 10 muni de pales 12 et entraîné en rotation par l'installation motrice 5 via un arbre de transmission 11. Avantageusement, ce rotor anti-couple 10 est caréné, la carène étant constituée par la base de la dérive 9.

Dans un but de simplification du texte, ce giravion peut représenter un giravion de référence ayant des rotors principal 6 et anti-couple 10 sans défaut ou un giravion particulier à régler comportant au moins un rotor principal 6 ou anti-couple 10 déficient. Les organes communs à ces deux giravions sont donc affectés d'une seule et même référence.

La présente invention concerne un procédé pour régler au moins l'un des rotor principal 6 ou anti-couple 10 lorsque celui-ci est déficient afin d'obtenir un faible niveau vibratoire, selon les trois directions du giravion 1 (axiale, latérale et verticale), pour assurer un confort optimal et une sécurité de fonctionnement maximale.

Ce procédé utilise un réseau de neurones construit au cours d'une étape d'apprentissage. Il illustre les relations entre, d'une part, des accélérations représentatives de vibrations engendrées sur au moins une partie (cabine de pilotage 3 ou/et poutre de queue 8) d'un giravion de référence et, d'autre part des défauts et des paramètres de réglage. Ces relations, traduites mathématiquement par le réseau de neurones, sont les relations de base pour un type de giravion (Ecureuil, Dauphin....).

En outre, le réseau de neurones est obtenu à partir d'au moins une première série de mesures utilisant un giravion de référence considéré comme un corps déformable, dont les rotors principal 6 et anti-couple 10 sans défaut sont réglés selon un réglage de référence pour lequel le niveau vibratoire d'au moins une partie (cabine de pilotage 3 et poutre de queue 8) du giravion de référence est minimal.

De plus, la première série de mesures est faite en mesurant, lors d'un fonctionnement particulier dudit giravion de référence, les valeurs d'au moins une accélération. Ces dernières sont représentatives de vibrations engendrées au niveau de ladite partie du giravion de référence et sont mesurées à des endroits quelconques de cette partie du giravion de référence :

a) d'une part, avec le rotor, principal 6 ou anti-couple 10, sans défaut du giravion de référence qui est réglé selon ledit réglage de référence ;

b) d'autre part, en introduisant des défauts dans ledit rotor, principal 6 ou anti-couple 10 ;

c) puis, en faisant varier les valeurs de réglage d'une pluralité de paramètres de réglage du rotor, principal 6 ou anti-couple 10.

En faisant varier tour à tour chacun des paramètres de réglage et chacun des défauts et en enregistrant les différences de vibrations (accélérations) par rapport à la référence en plusieurs endroits judicieusement choisis de ladite partie du giravion, on obtient donc le réseau de neurones. Celui-ci donne, pour chaque configuration de fonctionnement et chaque harmonique (obtenue par transformée de fourrier), les relations entre chaque point de mesure, chaque paramètre de réglage et chaque défaut.

Le réseau de neurones (spécifique pour un type de giravion) est du type « feed-forward » constitué de Nce cellules d'entrées (Nce = Np paramètre de réglage x Nd défauts x B pales, le symbole « x » représentant une multiplication), sans biais, possédant comme fonction d'activation la fonction identité. La couche de sortie est formée de Ncs cellules (Ncs=Na accéléromètres x Nc phases de vol x Nh harmoniques pour la partie réelle et la partie imaginaire de chaque poids) ayant aussi comme fonction d'activation la fonction identité, et toujours sans biais.

Dans ces conditions, chaque défaut qui doit être recherché par la suite est tout d'abord identifié. En prenant l'exemple d'un amortisseur de traînée de pale, on réalise les opérations suivantes :

- un amortisseur, présentant le défaut qu'il faudra détecter sur un giravion particulier, est installé sur le giravion de référence ;

- au sol avec les rotors principal 6 et anti-couple 10 tournants, ou éventuellement en vol si l'état de l'amortisseur le permet, on enregistre les vibrations liées à ce défaut et on établit la signature du défaut en termes d'amplitude et de phase, que l'on différencie du signal de référence sans défaut. Ainsi, on « fait apprendre » ce défaut au réseau de neurones qui sera capable de l'identifier par la suite.

Ainsi, en exploitation et sur un giravion particulier, la signature des défauts sera reconnue par le réseau de neurones, selon des critères adaptés, parmi ceux d'une liste de défauts préétablie, et ceci en raison d'amplitudes ou de déphasages particuliers de signaux issus de détecteurs.

Avantageusement, ces détecteurs sont des accéléromètres usuels 21, 22, 23, 24 mesurant donc des accélérations. Préférentiellement, en particulier pour régler le rotor principal 6, ces accélérations comportent, à titre non limitatif, dans la cabine de pilotage 3 au moins certaines des accélérations suivantes :

- les accélérations longitudinale, latérale et verticale au niveau du plancher de la cabine 3, sensiblement à l'aplomb du mât 6A du rotor principal 6, et susceptibles d'être mesurées par l'accéléromètre 21 ;

- l'accélération verticale au poste du pilote ; et

- les accélérations verticale et latérale au poste du copilote, mesurées par les accéléromètres 22,23.

De même, pour régler le rotor anti-couple 10, on mesure notamment des accélérations de la poutre de queue 8 portant ce rotor anti-couple 10, par exemple via un accéléromètre 24.

Par ailleurs, le procédé selon l'invention est remarquable puisque, durant une étape de mise au point, il permet de détecter d'éventuels défauts d'un rotor, principal 6 ou anti-couple 10, déficient et de déterminer une valeur de réglage d'au moins un des paramètres de réglage par l'intermédiaire d'une relation d'ajustement.

Pour détecter les défauts éventuels du rotor, principal 6 ou anti-couple 10, déficient :

d) on fait une deuxième série de mesures sur un giravion particulier, en mesurant les valeurs d'au moins certaines accélérations au niveau d'une partie 3,8 du giravion particulier lors d'un fonctionnement particulier dudit giravion particulier ; et

e) à partir de cette deuxième série de mesures d'accélérations et du réseau de neurones, on détecte les défauts éventuels dudit rotor déficient, principal 6 ou anti-couple 10.

En outre, la valeur de réglage $\alpha$ d'au moins un des paramètres de réglage est obtenue en minimisant la relation d'ajustement suivante :

$$\sum_{c} \lambda_c \sum_{a} \lambda_a \left( \sum_{h=1}^{B-2} \left( \lambda_h \left\| R_{c,a,h}(\alpha) + \gamma_{c,a,h} \right\|^2 \right) + \lambda_{B-1} \left( \frac{\left\| R_{c,a,B-1}(\alpha) + \gamma_{c,a,B-1} \right\|^2}{\left\| \gamma_{c,a,B} \right\|} \right)^2 \right)$$

dans laquelle:

- $\lambda_c$, $\lambda_a$, $\lambda_h$ et $\lambda_{B-1}$ sont des coefficients de pondération dépendant respectivement de la phase c du vol (stationnaire, croisière...), d'un accéléromètre a, d'harmoniques h et du nombre de pales B du rotor auquel on retranche une unité,

- $R_{c,a,h}$ est une cellule de sortie du réseau de neurones correspondant à l'harmonique h, l'accéléromètre a et la phase de vol c,

- $R_{c,a,B-1}$ est une cellule de sortie du réseau de neurones correspondant à l'harmonique B-1, l'accéléromètre a et la phase de vol c,

- $\gamma_{c,a,h}$ est un signal d'accélération à la fréquence h mesuré par l'accéléromètre a pour la phase de vol c,

- $\gamma_{c,a,B}$ est un signal d'accélération à la fréquence B mesuré par l'accéléromètre a pour la phase de vol c, et

- $\gamma_{c,a,B-1}$ est un signal d'accélération à la fréquence (B-1) mesuré par l'accéléromètre a pour la phase de vol c.

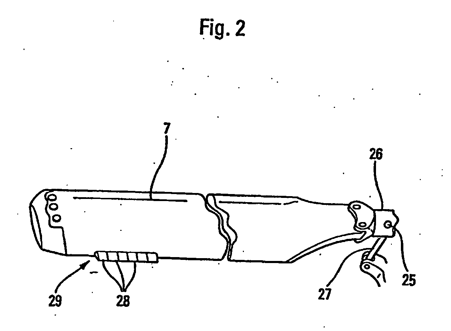

La figure 2 présente une pale 7 d'un rotor, principal 6 ou anti-couple 10, pourvue d'éléments de réglage.

En effet, pour régler le rotor 6, 10, les éléments de réglage sur lesquels agissent les paramètres de réglage définis précédemment sont :

- des masses d'équilibrage 25 , prévues de préférence au niveau du manchon 26 de la pale, minimisant le balourd du rotor déficient 6,10 sur lequel la pale est agencée ;

- des volets compensateurs 28, dénommés « tabs » par l'homme du métier et agencés sur le bord de fuite 29 de la pale 7 du rotor déficient si celui-ci est le rotor principal 6, qui permettent de compenser des écarts de portance entre deux pales distinctes d'un même rotor ; et

- une bielle 27 qui peut être allongée ou raccourcie pour augmenter ou réduire la portance de la pale du rotor déficient 6,10.

L'influence de la variation de la longueur de la bielle 27 sur la portance de la pale du rotor déficient 6,10 est fonction de la position relative du point de liaison de la bielle 27 sur cette pale. Par exemple, si la bielle 27 est reliée au bord d'attaque de la pale, une augmentation de la longueur de cette bielle 27 augmentera la portance de cette pale. A contrario, si la bielle 27 est reliée au bord de fuite de la pale, une augmentation de la longueur de cette bielle 27 réduira la portance de cette pale.

Dans une variante de l'invention, la première série de mesures est réalisée au moins au cours des vols d'essai suivants :

- un vol de référence avec les rotors 6,10, principal et anti-couple, réglés selon le réglage de référence qui permet de minimiser le niveau vibratoire ;

- des vols avec des défauts des rotors 6,10, principal et anti-couple;

- un vol avec un déréglage particulier d'au moins une masse d'équilibrage 25 d'une pale 7 ;

- un vol avec un déréglage particulier d'au moins une bielle 27 d'une pale 7 ; et

- un vol avec un déréglage particulier d'au moins un volet compensateur 28 qui est prévu sur le bord de fuite 29 d'une pale 7.

De plus, au moins un de ces vols d'essai comporte les phases suivantes, au cours desquelles on réalise des mesures:

- une phase de vol stationnaire ;

- une phase de vol de croisière à environ 50 m/s;

- une phase de vol à la puissance maximale continue ; et,

- un essai au sol avec les rotors principal 6 et anti-couple 10 qui tournent.

Enfin, pour construire le réseau de neurones au cours de l'étape d'apprentissage, on tient compte des hypothèses suivantes :

- les rotors principal 6 et anti-couple 10 sont considérés comme non isotropes;

- le giravion 1 est supposé être un corps déformable pour les deux premiers harmoniques de la fréquence de vibration des rotors principal 6 et anti-couple 10;

- les relations entre, d'une part, les défauts et les paramètres de réglage et, d'autre part, les valeurs des accélérations sont non linéaires; et

- le niveau vibratoire existant en un point particulier du giravion 1 est supposé correspondre à la somme des vibrations élémentaires engendrées audit point particulier et provoquées par les défauts et le dérèglement desdits paramètres de réglage.

Naturellement, la présente invention est sujette à de nombreuses variations quant à sa mise en oeuvre. Bien qu'un mode de réalisation ait été décrit, on comprend bien qu'il n'est pas concevable d'identifier de manière exhaustive tous les modes possibles.

**Revendications**

1. Procédé pour régler au moins un rotor déficient, principal (6) ou anti-couple (10), d'un giravion particulier utilisant un réseau de neurones qui illustre les relations entre, d'une part, des accélérations représentatives de vibrations engendrées sur au moins une partie d'un giravion de référence et, d'autre part des défauts et des paramètres de réglage,
   **caractérisé en ce que**:

- on détermine les défauts éventuels dudit rotor déficient,
- on détermine une valeur de réglage ($\alpha$) d'au moins un desdits paramètres de réglage en minimisant la relation d'ajustement suivante :

$$\sum_{c} \lambda_c \sum_{a} \lambda_a \left( \sum_{h=1}^{B-2} (\lambda_h \left\| R_{c,a,h}(\alpha) + \gamma_{c,a,h} \right\|^2) + \lambda_{B-1} \left( \frac{\left\| R_{c,a,B-1}(\alpha) + \gamma_{c,a,B-1} \right\|^2}{\left\| \gamma_{c,a,B} \right\|} \right)^2 \right)$$

dans laquelle :

- $\lambda_c$, $\lambda_a$, $\lambda_h$ et $\lambda_{B-1}$ sont des coefficients de pondération dépendant respectivement de la phase c du vol, d'un accéléromètre a, d'harmoniques h et du nombre de pales B du rotor auquel on retranche une unité,
- $R_{c,a,h}$ est une cellule de sortie du réseau de neurones correspondant à l'harmonique h, l'accéléromètre a et la phase de vol c,
- $R_{c,a,B-1}$ est une cellule de sortie du réseau de neurones correspondant à l'harmonique (B-1), l'accéléromètre a et la phase de vol c,
- $\gamma_{c,a,h}$ est un signal d'accélération à la fréquence h mesuré par l'accéléromètre a pour la phase de vol c,
- $\gamma_{c,a,B}$ est un signal d'accélération à la fréquence B mesuré par l'accéléromètre a pour la phase de vol c, et
- $\gamma_{c,a,B-1}$ est un signal d'accélération à la fréquence (B-1) mesuré par l'accéléromètre a pour la phase de vol c.

**2.** Procédé selon la revendication 1,
**caractérisé en ce que**, ledit réseau de neurones est obtenu à partir d'au moins une première série de mesures utilisant un giravion de référence (1) considéré comme un corps déformable, dont les rotors, principal (6) et anti-couple (10), sans défaut sont réglés selon un réglage de référence pour lequel le niveau vibratoire d'au moins une partie (3, 8) dudit giravion de référence (1) est minimal.

**3.** Procédé selon la revendication 2,
**caractérisé en ce que** ladite première série de mesures est faite en mesurant, lors d'un fonctionnement particulier dudit giravion de référence, les valeurs d'au moins une accélération qui sont mesurées à des endroits quelconques de ladite partie (3, 8) du giravion de référence et qui sont représentatives de vibrations engendrées au niveau de ladite partie (3, 8) du giravion de référence :

a) d'une part, avec le rotor, principal (6) ou anti-couple (10), sans défaut du giravion de référence (1) qui est réglé selon ledit réglage de référence ;
b) d'autre part, en introduisant des défauts dans ledit rotor, principal (6) ou anti-couple (10), sans défaut (6, 10) ;
c) puis, en faisant varier les valeurs de réglage d'une pluralité de paramètres de réglage dudit rotor, principal (6) ou anti-couple (10).

**4.** Procédé selon la revendication 3,
**caractérisé en ce que**, on réalise ladite première série de mesures au moins au cours des vols d'essai suivants :

- un vol de référence avec le rotor, principal (6) ou anti-couple (10), réglé selon ledit réglage de référence ;
- des vols avec des défauts dudit rotor, principal (6) ou anti-couple (10);
- un vol avec un déréglage particulier d'au moins une masse d'équilibrage (25) d'une pale (7) ;
- un vol avec un déréglage particulier d'au moins une bielle (27) d'une pale (7) ; et
- un vol avec un déréglage particulier d'au moins un volet compensateur (28) qui est prévu sur le bord de fuite (29) d'une pale (7).

**5.** Procédé selon la revendication 4,
**caractérisé en ce qu'**au moins l'un desdits vols d'essai comporte les phases suivantes, au cours desquelles on réalise des mesures :

- une phase de vol stationnaire ;
- une phase de vol de croisière à environ 50 m/s ;
- une phase de vol à la puissance maximale continue ; et

- un essai au sol avec les rotors principal (6) et anti-couple (10) qui tournent.

6. Procédé selon l'une quelconque des revendications précédentes,
**caractérisé en ce que**, pour détecter lesdits défauts éventuels dudit rotor déficient (6, 10) :

d) on fait une deuxième série de mesures sur ledit giravion particulier (1), en mesurant les valeurs d'au moins certaines desdites accélérations au niveau de ladite partie (3, 8) du giravion particulier lors d'un fonctionnement particulier dudit giravion particulier; et
e) à partir de cette deuxième série de mesures d'accélérations et du réseau de neurones, on détecte les défauts éventuels dudit rotor déficient (6, 10).

7. Procédé selon l'une quelconque des revendications précédentes,
**caractérisé en ce que** des éléments de réglage définissant lesdits paramètres de réglage comportent au moins :

- une masse d'équilibrage (25) de chacune des pales (7) du rotor déficient (6,10) ;
- une bielle (27) sur chacune des pales (7) du rotor déficient (6,10), à l'exception d'une pale qui représente une pale de référence ; et
- un volet compensateur (28) sur le bord de fuite (29) de chacune des pales (7) du rotor déficient si celui-ci est le rotor principal (6).

**Claims**

1. A method of adjusting at least one defective main or anti-torque rotor (6, 10) of a particular rotorcraft using a neural network that represents relationships between firstly accelerations representative of vibrations generated on at least a portion of a reference rotorcraft, and secondly defects and adjustment parameters,
**characterized in that**:

- any defects of said defective rotor are determined; and
- an adjustment value ($\alpha$) for at least one of said adjustment parameters is determined by minimizing the following adjustment relationship:

$$\sum_c \lambda_c \sum_a \lambda_a \left( \sum_{h=1}^{B-2} \left( \lambda_h \left\| R_{c,a,h}(\alpha) + \gamma_{c,a,h} \right\|^2 \right) + \lambda_{B-1} \left( \frac{\left\| R_{c,a,B-1}(\alpha) + \gamma_{c,a,B-1} \right\|^2}{\left\| \gamma_{c,a,B} \right\|} \right)^2 \right)$$

in which:

- $\lambda_c$, $\lambda_a$, $\lambda_h$, and $\lambda_{B-1}$ are weighting coefficients depending respectively on the stage of flight c, an accelerometer a, harmonics h, and the number of blades B of the rotor minus one;
- $R_{c,a,h}$ is an output cell of the neural network corresponding to the harmonic h, the accelerometer a, and the stage of flight c;
- $R_{c,a,B-1}$ is an output cell of the neural network corresponding to the harmonic (B-1), the accelerometer a, and the stage of flight c;
- $\gamma_{c,a,h}$ is an acceleration signal at the frequency h measured by the accelerometer a for the stage of flight c;
- $\gamma_{c,a,B}$ is an acceleration signal at the frequency B measured by the accelerometer a for the stage of flight c; and
- $\gamma_{c,a,B-1}$ is an acceleration signal at the frequency (B-1) measured by the accelerometer a for the stage of flight c.

2. A method according to claim 1, **characterized in that** said neural network is obtained from at least a first series of measurements using a reference rotorcraft (1) considered as being a deformable body, in which the defect-free main and anti-torque rotors (6, 10) are adjusted to a reference adjustment at which the vibration level of at least a portion (3, 8) of said reference rotorcraft (1) is at a minimum.

3. A method according to claim 2, **characterized in that** said first series of measurements is taken during a particular operation of said reference rotorcraft by measuring the values of at least one acceleration, which measurements are taken at arbitrary locations on said portion (3, 8) of the reference rotorcraft and are representative of vibrations generated at said portion (3, 8) of the reference rotorcraft:

a) firstly with the defect-free main or anti-torque rotor (6, 10) of the reference rotorcraft (1) adjusted to said reference adjustment;

b) secondly by introducing defects in said defect-free main or anti-torque rotor (6, 10); and

c) then by varying the adjustment values of a plurality of adjustment parameters of said main or anti-torque rotor (6, 10).

4. A method according to claim 3, **characterized in that** said first series of measurements is performed during at least the following test flights:

- a reference flight with the main or anti-torque rotor (6, 10) adjusted to said reference adjustment;
- flights with defects in said main or anti-torque rotor (6, 10);
- a flight with a particular wrong adjustment of at least one balance weight (25) of a blade (7);
- a flight with a particular wrong adjustment of at least one rod (27) of a blade (7); and
- a flight with a particular wrong adjustment of at least one compensator tab (28) provided on the trailing edge (29) of a blade (7).

5. A method according to claim 4, **characterized in that** at least one of said test flights includes the following stages, during which measurements are taken:

- a stage of hovering flight;
- a stage of cruising flight at about 50 m/s;
- a stage of flight at maximum continuous power; and
- a test on the ground with the main and the anti-torque rotors (6, 10) turning.

6. A method according to any one of the preceding claims, **characterized in that**, in order to detect said defects, if any, of said defective rotor (6, 10):

d) a second series of measurements on said particular rotorcraft (1) is taken by measuring the values of at least some of said accelerations at said portion (3, 8) of the particular rotorcraft during a particular operation of said particular rotorcraft; and

e) from said second series of measurements of accelerations and from the neural network, said defects, if any, of said defective rotor (6, 10) are detected.

7. A method according to any one of the preceding claims, **characterized in that** adjustment elements defining said adjustment parameters comprise at least:

- a balance weight (25) for each of the blades (7) of the defective rotor (6, 10);
- a rod (27) on each of the blades (7) of the defective rotor (6, 10), with the exception of a blade that represents a reference blade; and
- a compensator tab (28) on the trailing edge (29) of each of the blades (7) of the defective rotor if it is the main rotor (6).

**Patentansprüche**

1. Verfahren zum Einstellen mindestens eines defekten Hauptrotors (6) oder Heckrotors (10) eines besonderen Drehflüglers, das ein neuronales Netz verwendet, das die Beziehungen zwischen einerseits den Beschleunigungen, die für auf mindestens einem Teil eines Bezugsdrehflüglers erzeugte Schwingungen repräsentativ sind, und andererseits den Fehlern und den Einstellparametern darstellt,

**dadurch gekennzeichnet, dass**:

- die möglichen Fehler des defekten Rotors bestimmt werden,
- ein Einstellwert ($\alpha$) mindestens eines der Einstellparameter bestimmt wird, indem die folgende Anpassungsbeziehung minimiert wird:

$$\sum_{c} \lambda_c \sum_{a} \lambda_a \left( \sum_{h=1}^{B-2} \left( \lambda_h \| R_{c,a,h}(\alpha) + \gamma_{c,a,h} \|^2 \right) + \lambda_{B-1} \left( \frac{\| R_{c,a,B-1}(\alpha) + \gamma_{c,a,B-1} \|^2}{\gamma_{c,a,B}} \right)^2 \right)$$

bei der:

- $\lambda_c$, $\lambda_a$, $\lambda_h$ und $\lambda_{B-1}$ Gewichtungskoeffizienten sind, die je von der Phase c des Flugs, von einem Beschleunigungsmesser a, von Harmonischen h und von der Anzahl von Blättern B des Rotors abhängen, von der eine Einheit abgezogen wird,

- $R_{c,a,h}$ eine Ausgangszelle des neuronalen Netzes ist, die der Harmonischen h, dem Beschleunigungsmesser a und der Flugphase c entspricht,

- $R_{c,a,B-1}$ eine Ausgangszelle des neuronalen Netzes ist, die der Harmonischen (B-1), dem Beschleunigungsmesser a und der Flugphase c entspricht,

- $\gamma_{c,a,h}$ ein Beschleunigungssignal mit der Frequenz h ist, das vom Beschleunigungsmesser a für die Flugphase c gemessen wird,

- $\gamma_{c,a,B}$ ein Beschleunigungssignal mit der Frequenz B ist, das vom Beschleunigungsmesser a für die Flugphase c gemessen wird, und

- $\gamma_{c,a,B-1}$ ein Beschleunigungssignal mit der Frequenz (B-1) ist, das vom Beschleunigungsmesser a für die Flugphase c gemessen wird.

2.  Verfahren nach Anspruch 1, **dadurch gekennzeichnet, dass** das neuronale Netz ausgehend von mindestens einer erste Reihe von Messungen erhalten wird, indem ein Bezugsdrehflügler (1) verwendet wird, der als ein verformbarer Körper angenommen wird, dessen fehlerlose Hauptrotor (8) und Heckrotor (10) gemäß einer Bezugseinstellung eingestellt werden, bei der der Schwingungspegel mindestens eines Teils (3, 8) des Bezugsdrehflüglers (1) minimal ist.

3.  Verfahren nach Anspruch 2, **dadurch gekennzeichnet, dass** die erste Reihe von Messungen durchgeführt wird, indem bei einem besonderen Betrieb des Bezugsdrehflüglers die Werte mindestens einer Beschleunigung gemessen werden, die an beliebigen Stellen des Teils (3, 8) des Bezugsdrehflüglers gemessen werden und die für in Höhe des Teils (3, 8) des Bezugsdrehflüglers erzeugte Schwingungen repräsentativ sind:

    a)einerseits mit dem fehlerlosen Hauptrotor (6) oder Heckrotor (10) des Bezugsdrehflüglers (1), der gemäß der Bezugseinstellung eingestellt wird;
    b) andererseits, indem Fehler in den fehlerlosen Hauptrotor (6) oder Heckrotor (10) eingeführt werden;
    c) dann, indem die Einstellwerte mehrerer Einstellparameter des Hauptrotors (6) oder Heckrotors (10) verändert werden.

4.  Verfahren nach Anspruch 3, **dadurch gekennzeichnet, dass** die erste Reihe von Messungen mindestens während der folgenden Versuchsflüge durchgeführt werden:

    - ein Bezugsflug mit dem Hauptrotor (6) oder Heckrotor (10), der gemäß der Bezugseinstellung eingestellt ist;
    - Flüge mit Fehlern des Hauptrotors (6) oder Heckrotors (10);
    - einen Flug mit einer besonderen Verstellung mindestens eines Auswuchtgewichts (25) eines Blatts (7),
    - einen Flug mit einer besonderen Verstellung mindestens einer Schubstange (27) eines Blatts (7); und
    - einen Flug mit einer besonderen Verstellung mindestens einer Trimmklappe (26), die an der Hinterkante (29) eines Blatts (7) vorgesehen ist.

5.  Verfahren nach Anspruch 4, **dadurch gekennzeichnet, dass** mindestens einer der Versuchsflüge die folgenden Phasen aufweist, während denen Messungen durchgeführt werden:

    - eine Schwebeflugphase;
    - eine Reiseflugphase bei etwa 50 m/s;
    - eine Flugphase mit der maximalen kontinuierlichen Leistung; und
    - einen Bodenversuch mit drehendem Hauptrotor (6) und Heckrotor (10).

6.  Verfahren nach einem der vorhergehenden Ansprüche, **dadurch gekennzeichnet, dass** zur Erfassung der möglichen Fehler des defekten Rotors (6, 10):

d) eine zweite Reihe von Messungen an dem besonderen Drehflügler (1) durchgeführt werden, indem die Werte mindestens bestimmter Beschleunigungen in Höhe des Teils (3, 8) des besonderen Drehflüglers bei einem besonderen Betrieb des besonderen Drehflüglers gemessen werden; und

e) ausgehend von dieser zweiten Reihe von Messungen von Beschleunigungen und dem neuronalen Netz die möglichen Fehler des defekten Rotors (6, 10) erfasst werden.

7. Verfahren nach einem der vorhergehenden Ansprüche, **dadurch gekennzeichnet, dass** Einstellelemente, die die Einstellparameter definieren, mindestens aufweisen:

- ein Auswuchtgewicht (25) jedes der Blätter (7) des defekten Rotors (6, 10);
- eine Schubstange (27) an jedem der Blätter (7) des defekten Rotors (6, 10), mit Ausnahme eines Blatts, das ein Bezugsblatt darstellt; und
- eine Trimmklappe (2B) an der Hinterkante (29) jedes der Blätter (7) des defekten Rotors, wenn dieser der Hauptrotor (6) ist.

Fig. 1

EP 1 754 031 B1

## Fig. 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2824395

**Littérature non-brevet citée dans la description**

- **D.RUMLHART ; G.HINTON ; R.WILLIAMS.** *Nature,* 1996, vol. 323, 533-536